# EUROPÄISCHE PATENTSCHRIFT

(11) **EP 0 831 129 B1**
(45) Veröffentlichungstag und Bekanntmachung des Hinweises auf die Patenterteilung: **27.12.2000**
(21) Anmeldenummer: 97115690.6
(22) Anmeldetag: 10.09.1997
(51) Int. Cl.: C09B 31/08, C09B 35/04

(54) **Disazofarbstoffe**
Disazodyestuffs
Colorants du type disazoique

(30) Priorität: 23.09.1996 DE 19638890
(43) Veröffentlichungstag der Anmeldung: 25.03.1998
(73) Patentinhaber: BAYER AG, 51368 Leverkusen (DE)
(72) Erfinder: Kunde, Klaus, Dr., 53819 Neunkirchen (DE)

(56) Entgegenhaltungen:
- EP-A- 0 301 350
- EP-A- 0 534 903

## Beschreibung

Die vorliegende Erfindung betrifft neue Disazofarbstoffe, Verfahren zu deren Herstellung und deren Verwendung zum Färben von cellulosehaltigen Materialien.

Die neuen Disazofarbstoffe entsprechen der allgemeinen Formel (I) 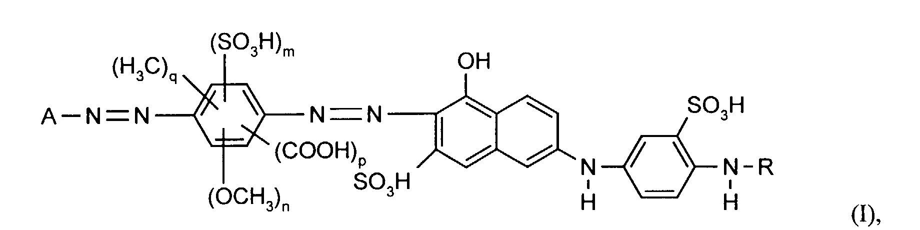 worin
- A: für einen Rest der Formel 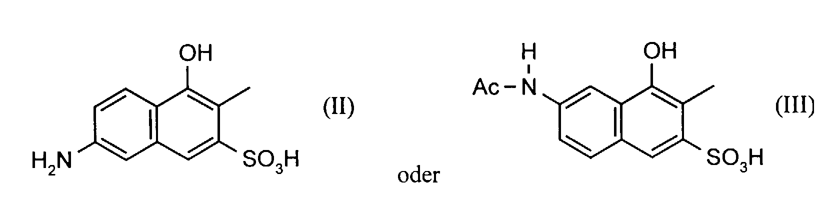 steht, worin
Ac für einen Acetyl- oder Propionyl- oder einen gegebenenfalls durch CH₃, CH₃O oder COOH substituierten Benzoylrest steht, m, n, p, q für 0 oder 1 stehen und
m + p = 1 ist,
- R: für einen gegebenenfalls durch CH₃, CH₃O oder COOH substituierten Benzoylrest steht.

Gemäß EP-A-534 903 werden Disazofarbstoffe offenbart, die beispielhaft noch verbesserungstähige Lichtechtheiten aufweisen.

Bevorzugte Farbstoffe der Formel (I) sind solche, worin
- A: für einen Rest der Formel 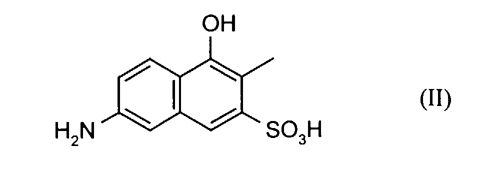 oder 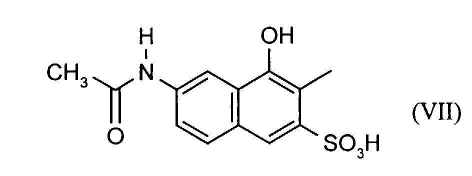 steht.

Im Rahmen der Formel (I) besonders bevorzugt sind Farbstoffe der Formeln 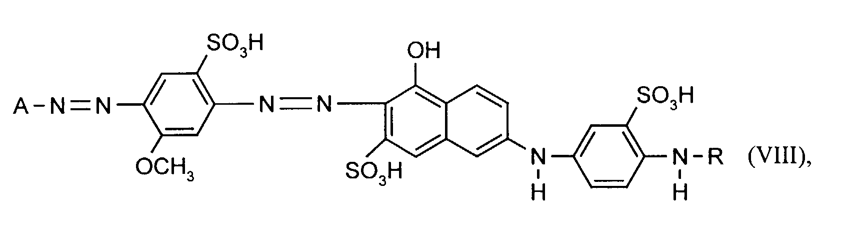 und 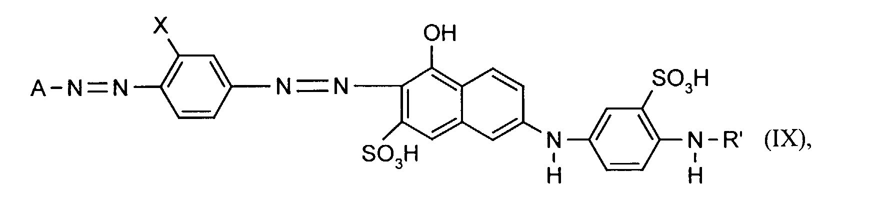 worin
- A: für einen Rest der Formel (II) oder (VII) steht, und
- X: für SO₃H oder COOH steht,
- R und R': für einen gegebenenfalls durch CH₃, CH₃O oder COOH substituierten Benzoylrest stehen.

Von besonderem Interesse sind Farbstoffe der Formeln (VIII) und (IX), worin
- A: für ein Rest der Formel (II) oder (VII) steht,
- X: für SO₃H oder COOH steht, und
- R: für COC₆H₅ steht.

Die Erfindung betrifft ebenfalls einen Farbstoff der Formel

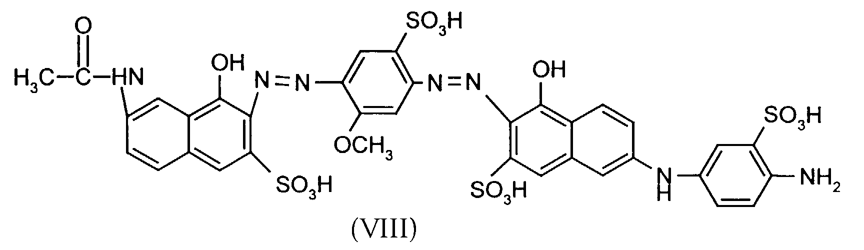

Die neuen Farbstoffe der Formel (I) können in an sich bekannter Weise hergestellt werden, indem man eine Verbindung der allgemeinen Formel (IV) 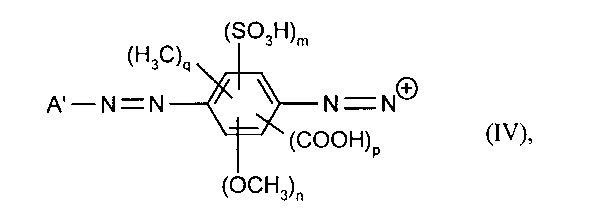 worin A' für einen Rest der Formel 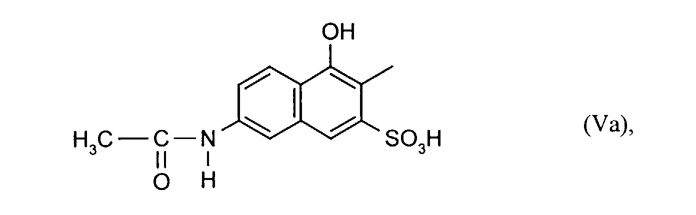 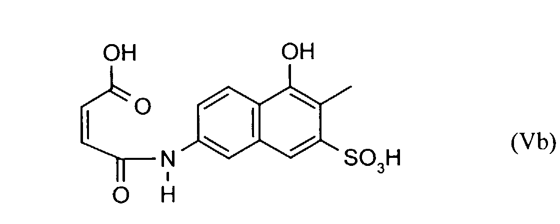 oder 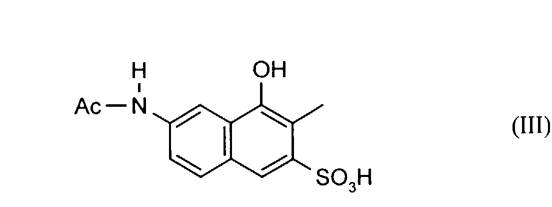 steht, worin
- Ac: die oben angegebene Bedeutung hat, und
- m, n, p und q: die oben angegebene Bedeutung haben mit einer Verbindung der Formel (VI) 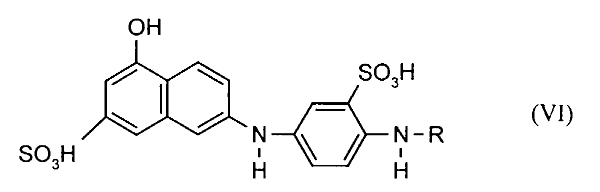 worin
- R: die oben angegebene Bedeutung hat,
kuppelt und anschließend den Maleinylrest oder Acetylrest selektiv abspaltet. Der ebenfalls neue Farbstoff der Formel (VIII) kann analog hergestellt werden, wobei R in Formel (VI) Wasserstoff bedeutet.

Die Diazoniumverbindungen der Formel (IV) können erhalten werden, indem man die Verbindungen der allgemeinen Formel (X) 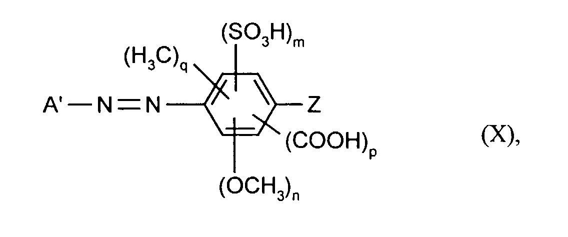 worin
- Z: für NO₂ steht, und
- A', m, n, p und q: die oben angegebene Bedeutung haben,
mit Natriumsulfid in an sich bekannter Weise zu den Aminoverbindungen der allgemeinen Formel (XI) 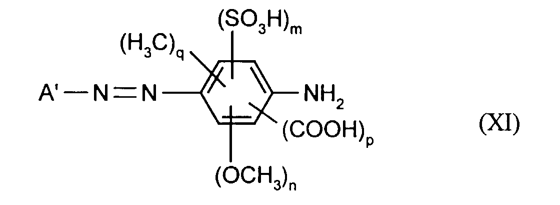 worin
- A', m, n, p und q: die oben angegebene Bedeutung haben,
reduziert oder Verbindungen der Formel (X), worin Z für NHCOCH₃ oder NHCOCH=CHCOOH steht, in an sich bekannter Weise zu den Aminoverbindungen der Formel (XI) gegebenenfalls selektiv hydrolysiert und diese in an sich bekannter Weise diazotiert.

Die Kupplungskomponente der Formel (VI) mit R = Wasserstoff ist bekannt; sie kann in an sich bekannter Weise in wäßriger Lösung bei pH-Werten zwischen 3 und 10, vorzugsweise zwischen 5 und 8 bei Temperaturen zwischen 0 und 50°C, vorzugsweise zwischen 10 und 40°C mit gegebenenfalls durch CH₃, OCH₃ oder COCI substituiertem Benzoylchlorid acyliert werden.

Die Kupplung der Diazoniumverbindungen der Formel (IV) mit den Verbindungen der Formel (VI) erfolgt bevorzugt in wäßrigem oder wässrig-organischem Medium, vorzugsweise in Wasser, in Lösung oder Suspension bei 0 bis 40°C, vorzugsweise bei 5 bis 20°C, bei pH-Werten zwischen 7 und 10, vorzugsweise zwischen 8,5 und 9,5; die selektive Abspaltung des Maleinylrestes erfolgt bei Temperaturen zwischen 60 und 105°C, vorzugsweise zwischen 70 und 90°C bei pH-Werten zwischen 2 und 4, vorzugsweise zwischen 2,5 und 3,5, die Abspaltung des Acetylrestes erfolgt bei Temperaturen zwischen 60 und 105°C, vorzugsweise zwischen 70 und 90°C bei pH-Werten zwischen 10 und 13, vorzugsweise zwischen 11 und 12.

Die erfindungsgemäßen Farbstoffe färben cellulosehaltige Materialien, insbesondere Papier, Baumwolle und Viskose sowie Leder in blauen Tönen mit guten Naß- und Lichtechtheiten.

Die erfindungsgemäßen Farbstoffe können nach allen in der Papier- und Textilindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Die mit den erfindungsgemäßen Farbstoffe erhaltenen Papierfärbungen zeichnen sich durch gute Licht- und Naßechtheit (Ausblutechtheit) sowie Säure-, Alkali- und Alaun- Echtheit aus. Auch auf die Brillanz und Klarheit der Farbtöne ist hinzuweisen. Ferner ist das Kombinationsverhalten mit geeigneten Farbstoffen sehr gut.

Zum Färben von Papier in der Masse können die Farbstoffe der Papierpulpe vor der Blattbildung zugesetzt werden, entweder dem Dickstoff nach dem Aufschlagen der Cellulose oder dem Dünnstoff vor dem Auflaufen auf die Papiermaschine. Bei der Herstellung von in der Masse geleimtem Papier werden sie vorzugsweise vor der Zugabe des Leimungsmittels dem Dünnstoff zugesetzt.

Bei der Oberflächenfärbung wird der Farbstoff nach der Blattbildung appliziert. Dies geschieht vorzugsweise in der Leimpresse, indem der Farbstoff in einer konzentrierten Stärkelösung aufgelöst und in dieser Form auf das Papier aufgebracht wird.

Die Farbstoffe der Formel (I) und (VIII) können eingesetzt werden als feste Farbstoffpräparationen, vorzugsweise als Pulver oder Granulate, die gegebenenfalls übliche Zusatzstoffe wie z.B. ionische oder nichtionische Einstellmittel und/oder Entstaubungsmittel, enthalten.

Für das erfindungsgemäße Verfahren bevorzugt ist die Verwendung flüssiger Präparationen, insbesondere die Verwendung von konzentrierten wässrigen Lösungen, die vorzugsweise frei sind von organischen Lösungsvermittlern und mindestens einen Farbstoff der allgemeinen Formel (I) bzw. der Formel (VIII) enthalten. Die flüssigen Farbstoffpräparationen enthalten im allgemeinen 10 bis 40Gew.-%, vorzugsweise 20 bis 40 Gew.-% an mindestens einem Farbstoff der Formel (I) bzw. der Formel (VIII) bezogen auf die fertige Präparation.

### Beispiel 1

28,4 g 5-Amino-4-methoxy-2-nitrobenzolsulfonsäure werden in 300 ml Wasser bei einem pH-Wert von 1,5 und einer Temperatur von 30°C diazotiert. Zu dieser Suspension werden 28,1 g 6-Acetylamino-4-hydroxy-2-naphthalinsulfonsäure zugegeben. Der pH-Wert der Suspension wird mit Soda-Lösung auf 3 gebracht und gehalten. Nach Beendigung der Kupplung wird der Ansatz neutralisiert, dann werden 25 g Natriumsulfid techn. (60 %) bei einer Temperatur von 60°C zugesetzt. Nach Beendigung der Reduktion wird die Aminoazoverbindung durch Zugabe von Salz ausgefällt und isoliert (λₘₐₓ = 553 nm).

### Beispiel 2

40,0 g 4-Hydroxy-7-(4'-amino-3'-sulfophenylamino)-2-naphthalinsulfonsäure werden mit Soda-Lösung bei 25°C und einem pH-Wert von 6 in 500 ml Wasser gelöst, dann werden 17,5 g Benzoylchlorid zugetropft, wobei der pH-Wert mit Soda-Lösung konstant gehalten wird. Das Kondensationsprodukt entspricht der folgenden Formel

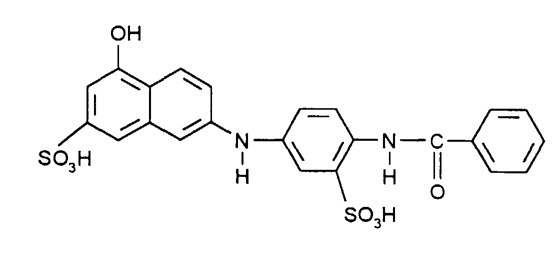

### Beispiel 3

57,6 g der Aminoverbindung aus Beispiel 1 werden in 500 ml Wasser bei einem pH-Wert von 1,5 und einer Temperatur von 30°C diazotiert. Diese Diazoniumverbindung tropft man bei einer Temperatur von 25°C zu einer Lösung von 50,4 g des Kondensationsproduktes aus Beispiel 2, wobei der pH-Wert mit Soda-Lösung auf 7 gehalten wird. Nach Beendigung der Kupplung wird der Farbstoff mit Salz ausgefällt, isoliert und getrocknet. Er entspricht der folgenden Formel

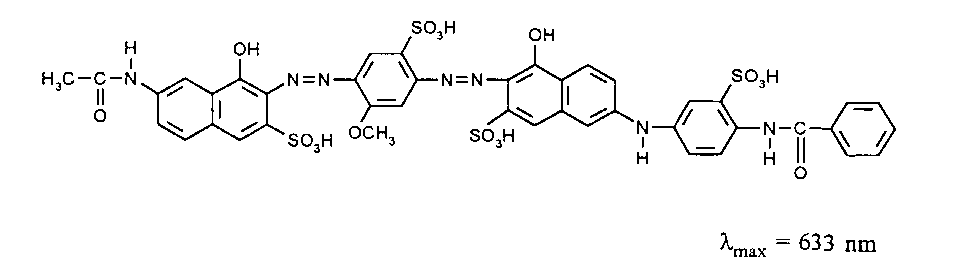

### Beispiel 4

18,2 g 5-Nitro-2-aminobenzoesäure werden in 300 ml Wasser bei einem pH-Wert von 1,5 und einer Temperatur von 30°C diazotiert. Zu dieser Suspension werden 33,7 g 7-Maleinylamino-4-hydroxy-2-naphthalinsulfonsäure zugegeben. Der pH-Wert der Suspension wird mit Natriumacetat auf 3 gebracht und gehalten. Nach Beendigung der Kupplung wird der Ansatz neutralisiert, dann werden 25 g Natriumsulfid techn. (60 %) bei einer Temperatur von 60°C zugesetzt. Nach Beendigung der Reduktion wird die Aminoazoverbindung durch Zugabe von Salz ausgefällt und isoliert.

50,2 g dieser Aminoazoverbindung werden in 500 ml Wasser bei einem pH-Wert von 1,5 und einer Temperatur von 30°C diazotiert. Diese Diazoniumverbindung tropft man bei einer Temperatur von 25°C zu einer Lösung von 50,4 g des Kondensationsprodukts aus Beispiel 2, wobei der pH-Wert mit Sodalösung auf 7,5 gehalten wird. Nach Beendigung der Kupplung wird der Ansatz auf 90°C erhitzt, dann wird der pH-Wert mit Salzsäure auf 3 gebracht und bis zur Beendigung der Abspaltung des Maleinylrestes gehalten. Der Farbstoff wird mit Salz ausgefällt, isoliert und getrocknet. Er entspricht der folgenden Formel

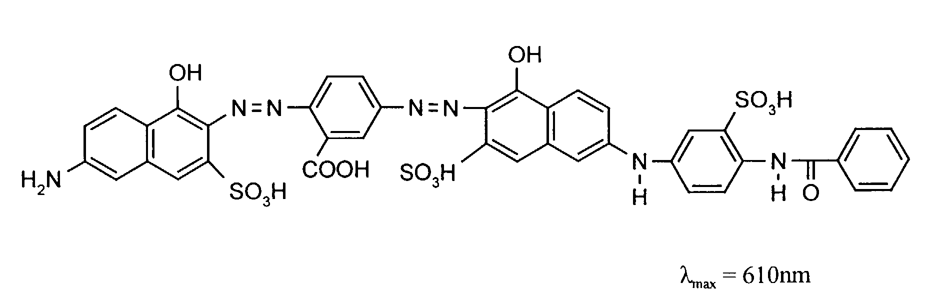

In der folgenden Tabelle sind weitere Farbstoffe aufgeführt, die analog zu den in den Beispielen 3 und 4 beschriebenen Verfahren hergestellt wurden.

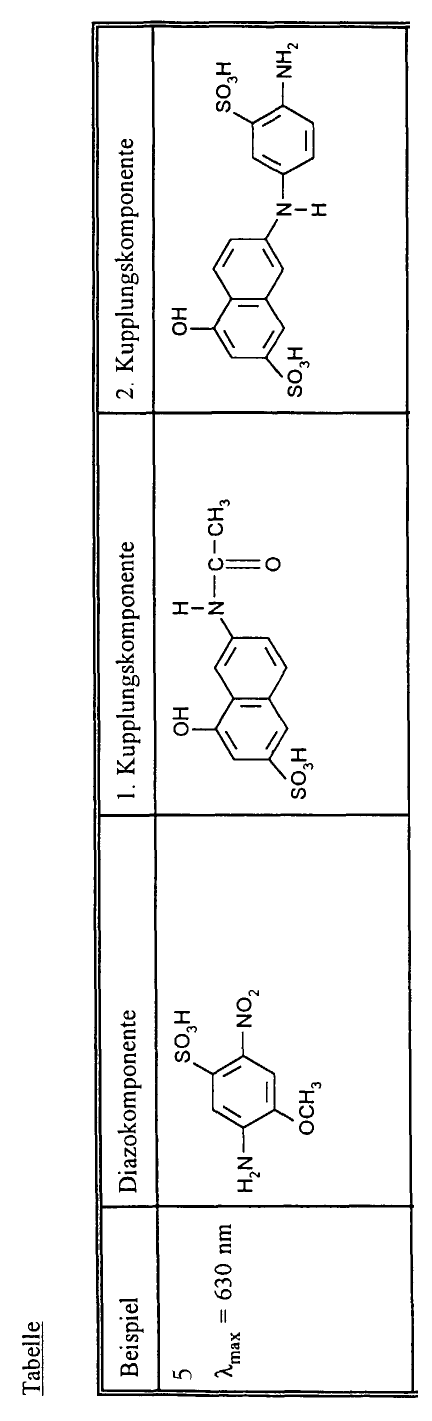

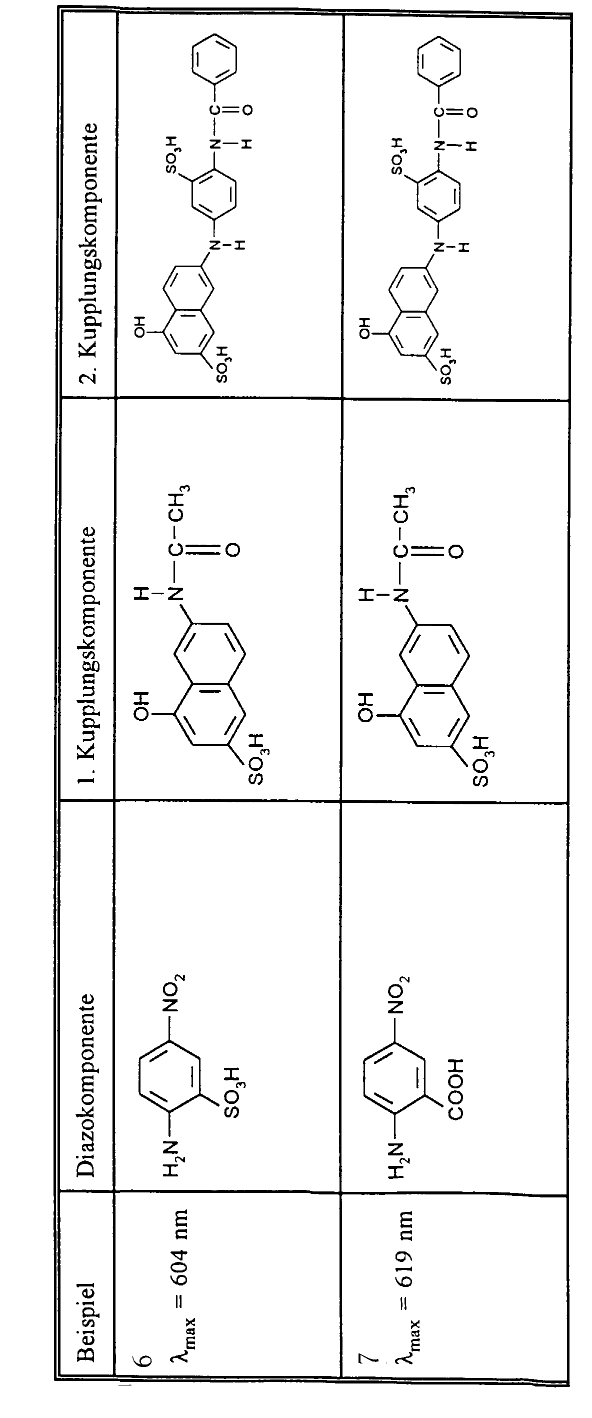

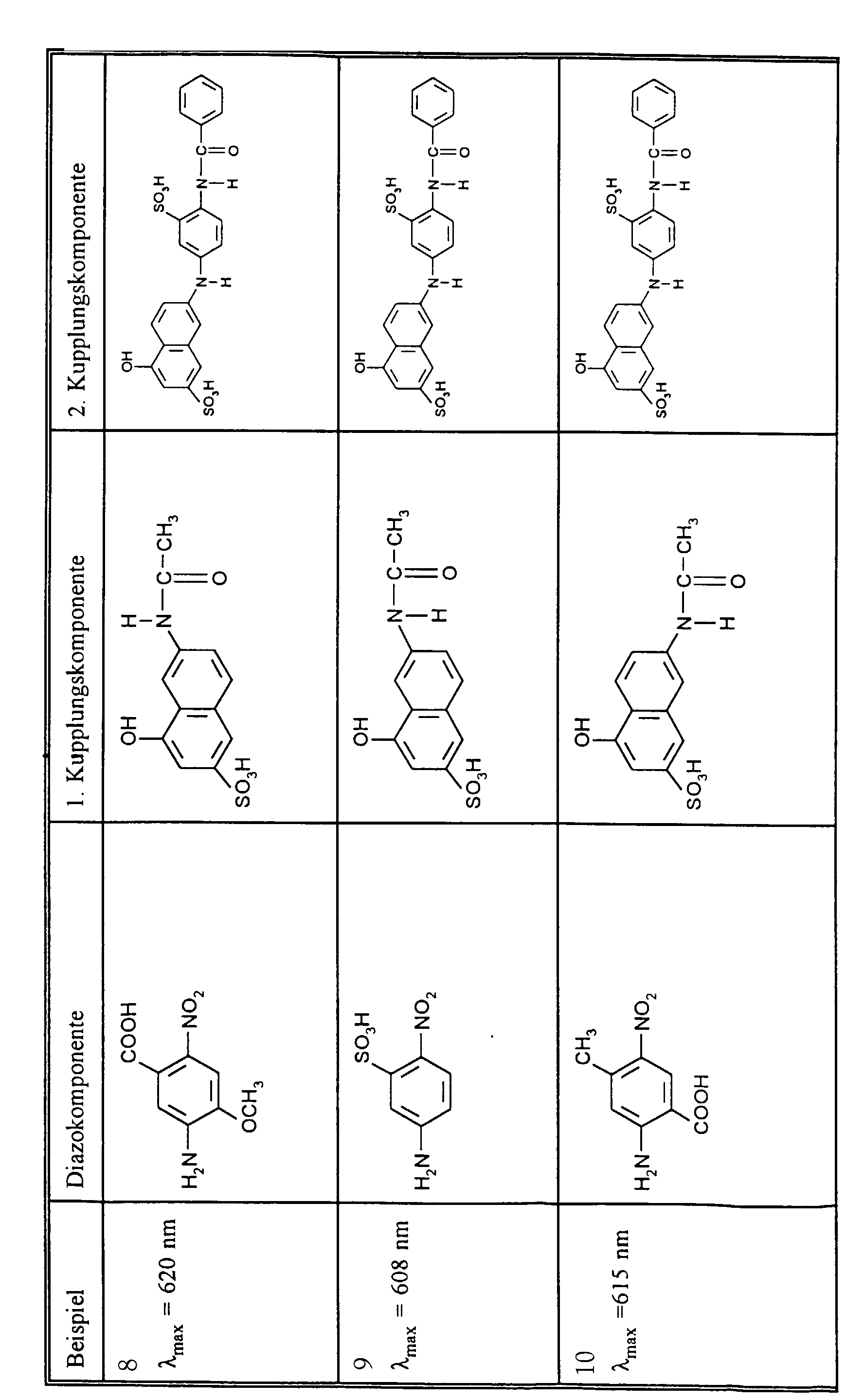

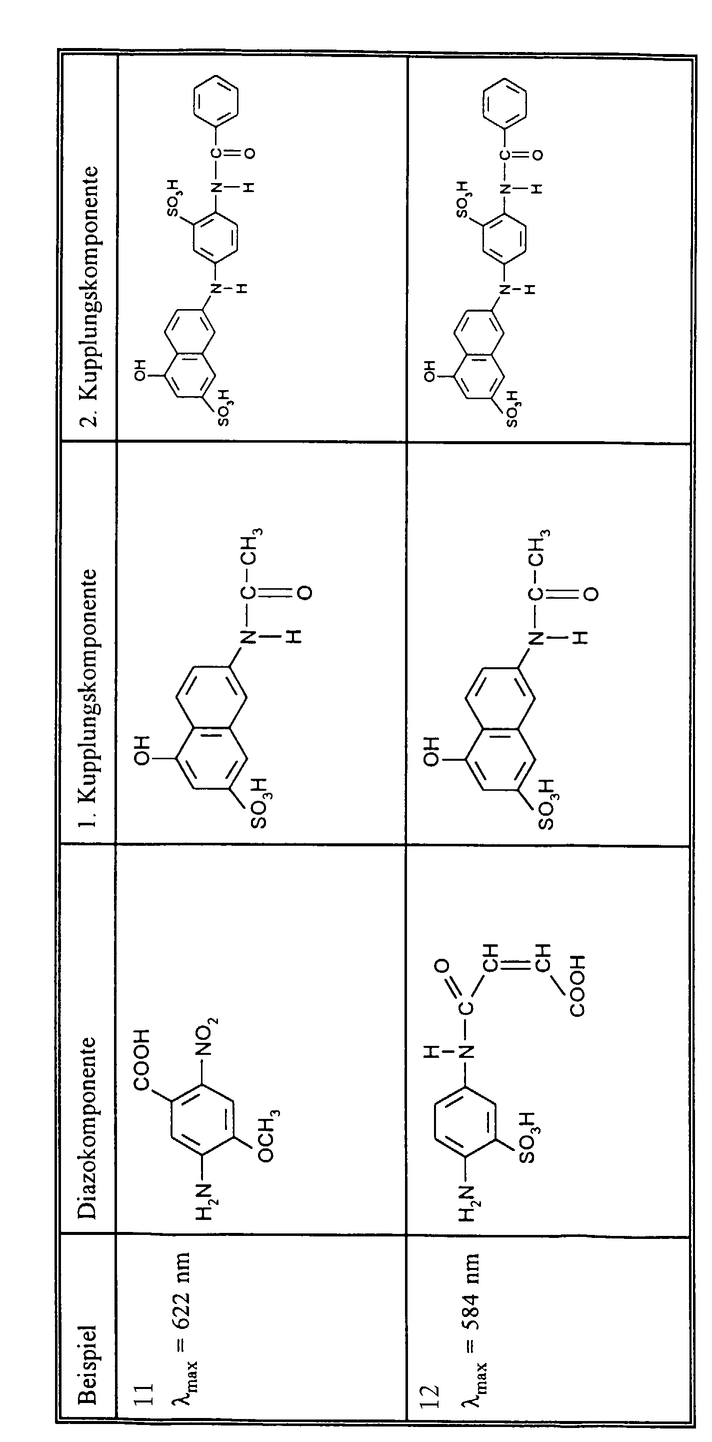

## Patentansprüche

1. Farbstoffe der Formel (I) 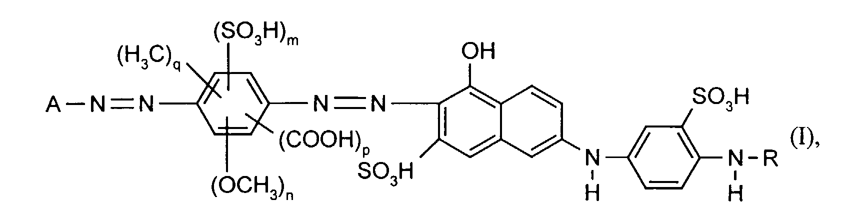 worin
A für einen Rest der Formel 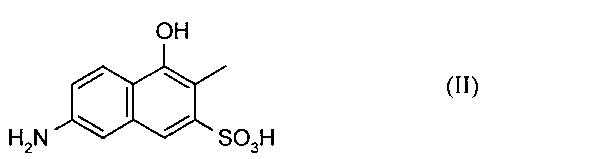 oder 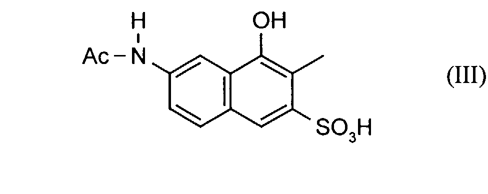 steht,
worin
Ac für einen Acetyl- oder Propionyl- oder einen gegebenenfalls durch CH₃, CH₃O oder COOH substituierten Benzoylrest steht,
m, n, p, q für 0 oder 1 stehen und
m + p = 1 ist,
R für einen gegebenenfalls durch CH₃, CH₃O oder COOH substituierten Benzoylrest steht,

2. Farbstoffe gemäß Anspruch 1, worin
A für einen Rest der Formel 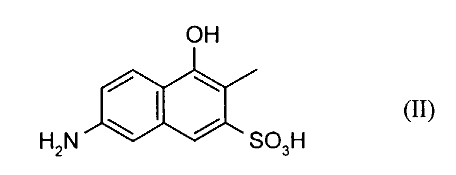 oder 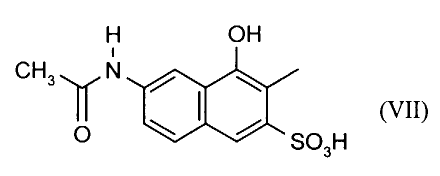 steht.

3. Farbstoffe gemäß Ansprüchen 1 und 2 der Formel 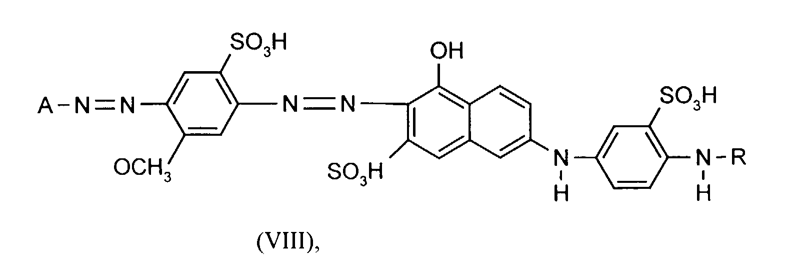 oder 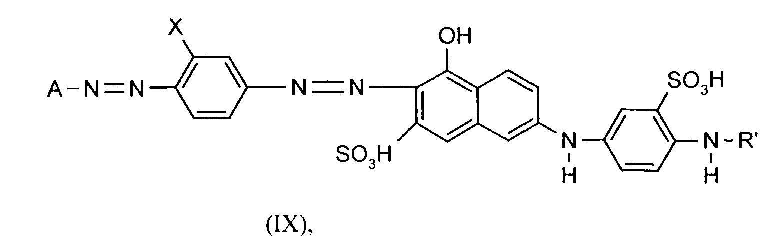 worin
A für einen Rest der Formel (II) oder (VII) gemäß Anspruch 2 steht,
X für SO₃H oder COOH steht,
R und R' für gegebenenfalls durch CH₃, CH₃O oder COOH substituiertes Benzoyl stehen, und

4. Farbstoffe gemäß Anspruch 3, worin R und R' für 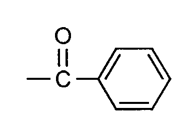 stehen.

5. Farbstoff gemäß der folgenden Formel:

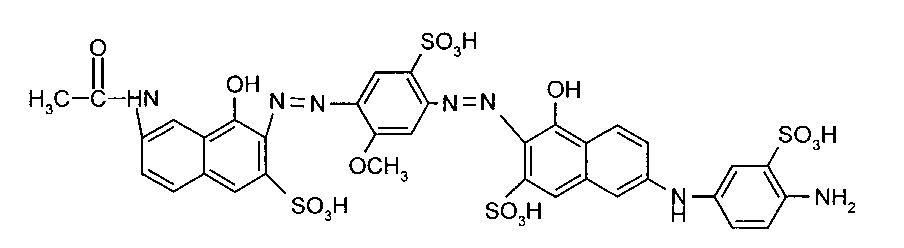

6. Verfahren zur Herstellung von Farbstoffen gemäß Anspruch 1, dadurch gekennzeichnet, daß man eine Verbindung der allgemeinen Formel (IV) 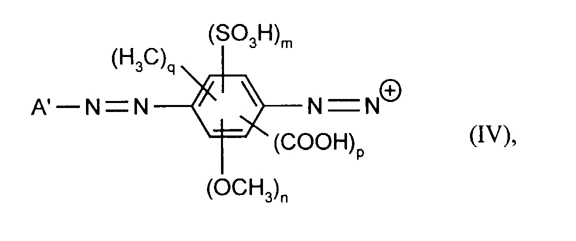 worin A' für einen Rest der Formel 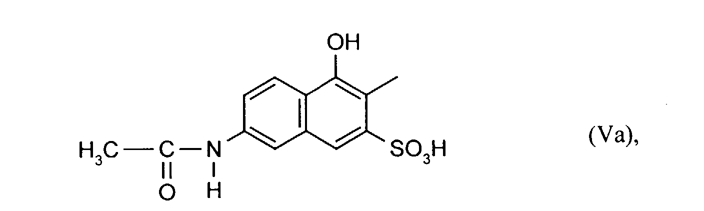 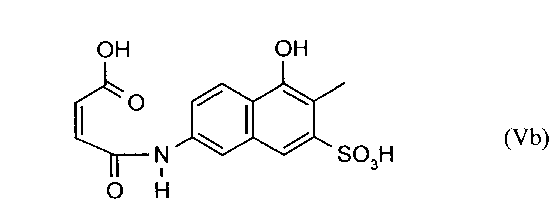 oder 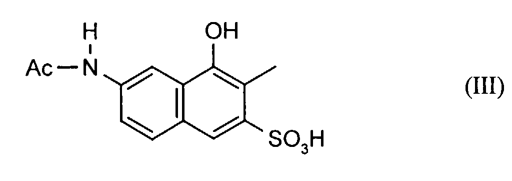 steht,
worin
Ac, m, n, p und q die in Anspruch 1 angegebene Bedeutung haben,
mit einer Verbindung der Formel (VI) 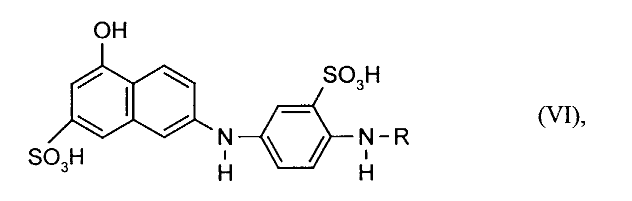 worin
R die in Anspruch 1 angegebene Bedeutung hat,
kuppelt und anschließend den Maleinylrest oder Acetylrest selektiv abspaltet.

7. Verwendung der Farbstoffe gemäß Anspruch 1 oder Anspruch 5 zum Färben von cellulosehaltigen Materialien, insbesondere Papier.

## Claims

1. Dyestuffs of the formula (I) 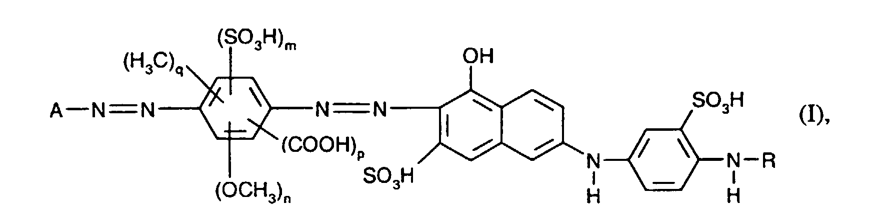 in which
A represents a radical of the formula 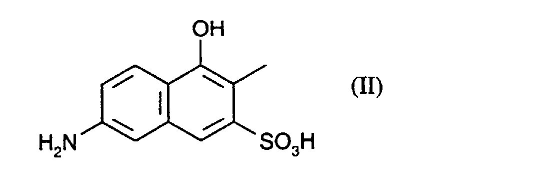 or 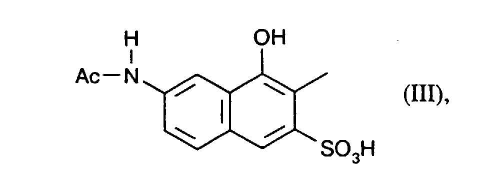 in which
Ac represents an acetyl or propionyl radical or a benzoyl radical which is optionally substituted by CH₃, CH₃O or COOH,
m, n, p and q represent 0 or 1 and
m + p = 1,
R represents a benzoyl radical which is optionally substituted by CH₃, CH₃O or COOH.

2. Dyestuffs according to Claim 1, in which
A represents a radical of the formula 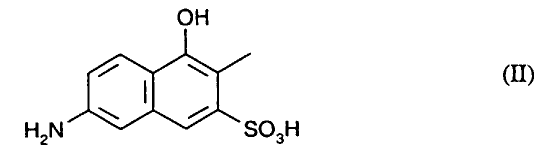 or

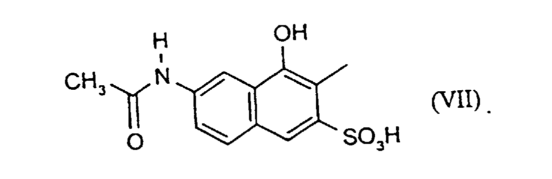

3. Dyestuffs according to Claims 1 and 2, of the formula 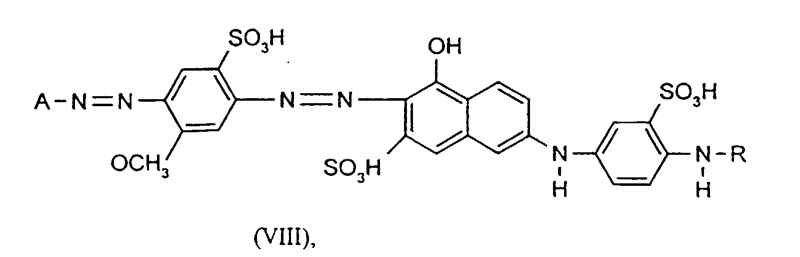 or 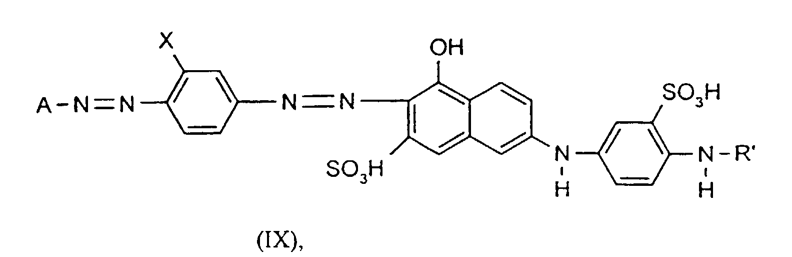 in which
A represents a radical of the formula (II) or (VII) according to Claim 2,
X represents SO₃H or COOH,
R and R' represent benzoyl which is optionally substituted by CH₃, CH₃O or COOH and.

4. Dyestuffs according to Claim 3, in which R and R' represent

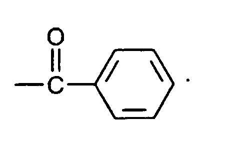

5. Dyestuff according to the following formula:

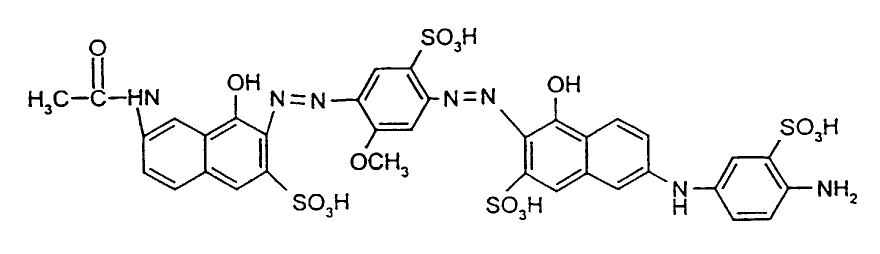

6. Process for the preparation of dyestuffs according to Claim 1, characterized in that a compound of the general formula (IV) 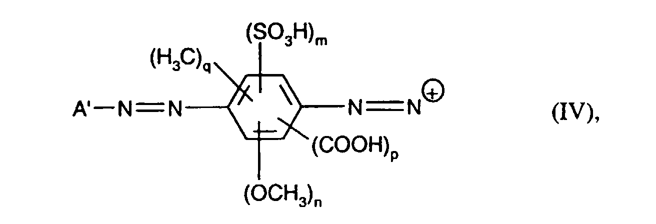 in which A' represents a radical of the formula 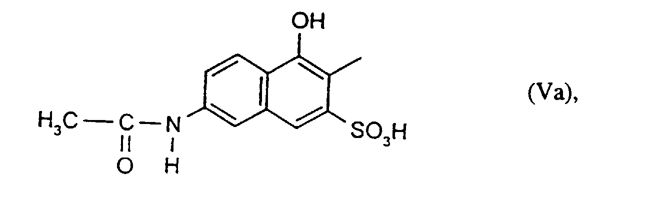 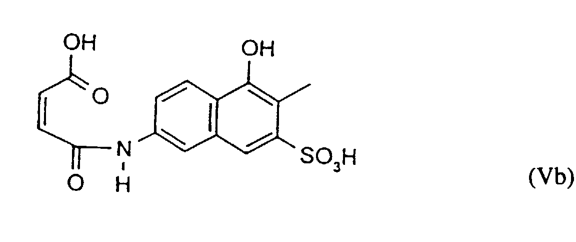 or 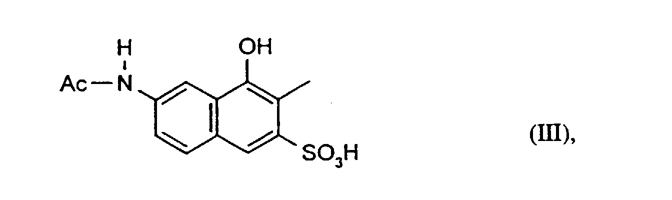 in which
Ac, m, n, p and q have the meaning given in Claim 1,
is coupled with a compound of the formula (VI) 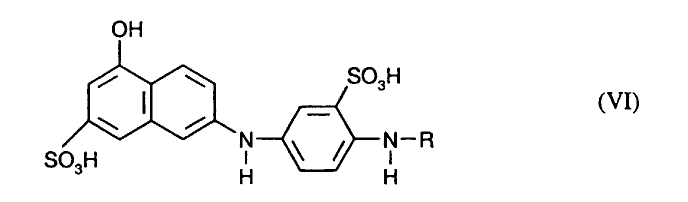 in which
R has the meaning given in Claim 1,
and then the maleyl radical or acetyl radical is split off selectively.

7. Use of the dyestuffs according to Claim 1 or Claim 5 for dyeing cellulosic materials, in particular paper.

## Revendications

1. Colorants de formule (I) 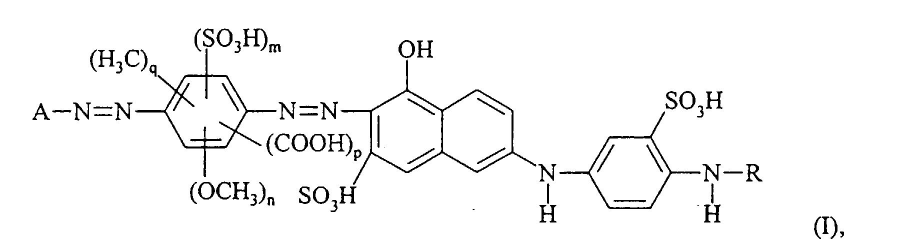 dans laquelle
A représente un groupe de formule 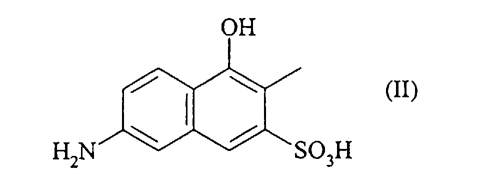 ou 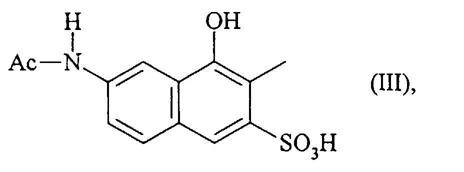 dans laquelle
Ac représente un radical acétyle ou propionyle ou un radical benzoyle éventuellement substitué par CH₃, CH₃O ou COOH,
m, n, p, q sont égaux à 0 ou 1 et
m + p = 1,
R représente un radical benzoyle éventuellement substitué par CH₃, CH₃O ou COOH.

2. Colorants selon la revendication 1, pour lesquels
A représente un groupe de formule 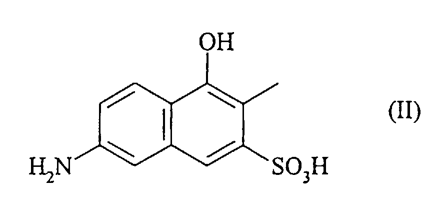 ou

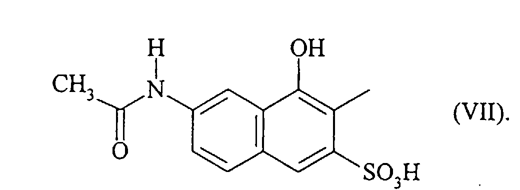

3. Colorants selon les revendications 1 et 2, de formule 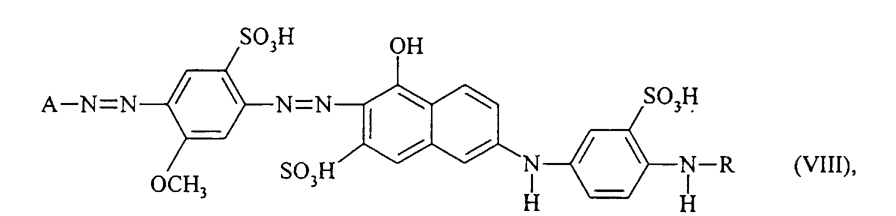 ou 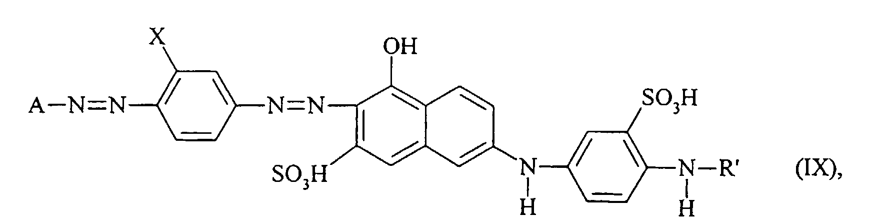 dans laquelle
A représente un groupe de formule (II) ou (VII) selon la revendication 2,
X représente SO₃H ou COOH,
R et R' représentent chacun un radical benzoyle éventuellement substitué par CH₃, CH₃O ou COOH.

4. Colorants selon la revendication 3, pour lesquels R et R' représentent chacun

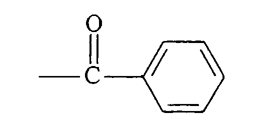

5. Colorant répondant à la formule

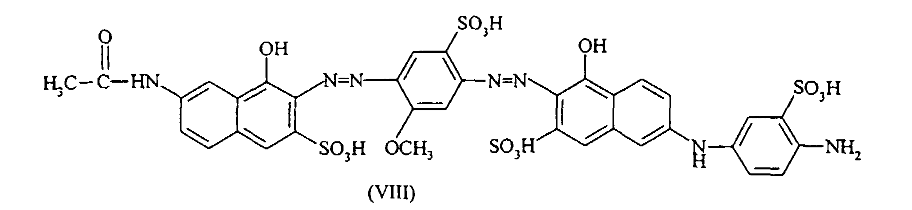

6. Procédé de préparation des colorants de la revendication 1, caractérisé en ce que l'on copule un composé de formule générale (IV) 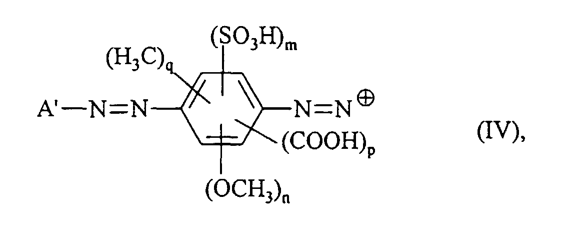 dans laquelle A' représente un groupe de formule 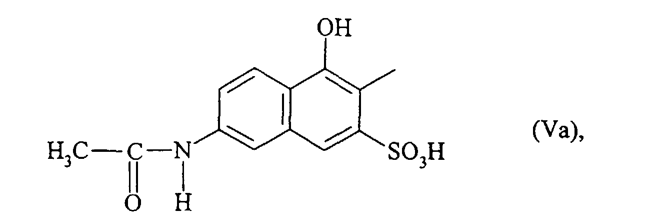 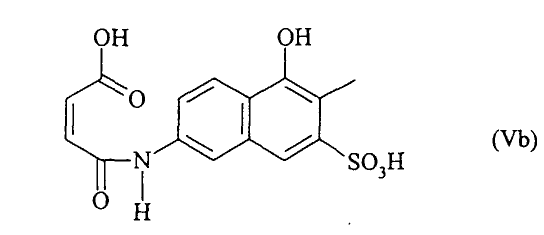 ou 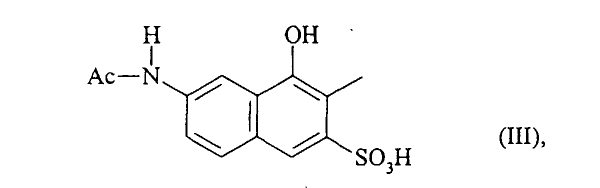 dans lesquelles
Ac, m, n, p et q ont les significations indiquées dans la revendication 1, avec un composé de formule (VI) 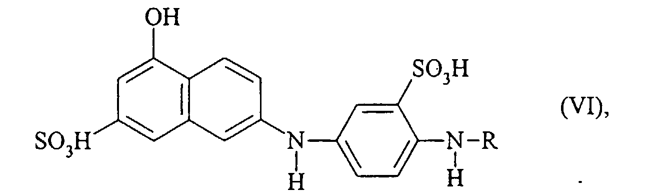 dans laquelle
R a les significations indiquées dans la revendication 1,
puis on scinde sélectivement le radical maléyle ou acétyle.

7. Utilisation des colorants selon la revendication 1 ou la revendication 5 pour la teinture ou la coloration de matières contenant de la cellulose, en particulier du papier.
